# EUROPEAN PATENT SPECIFICATION

(11) **EP 1 484 513 B1**
(45) Date of publication and mention of the grant of the patent: **28.03.2007**
(21) Application number: 04012898.5
(22) Date of filing: 01.06.2004
(51) Int. Cl.: F16B 5/06, B60R 13/02, F16B 21/09, F16B 21/08

(54) **Resilient fastener with means for preventing rotation**
Elastisches Befestigungselement mit einer Verdrehsicherung
Element de fixation élastique avec dispositif anti-rotation

(30) Priority: 06.06.2003 US 476745 P
(43) Date of publication of application: 08.12.2004
(73) Proprietor: Newfrey LLC, Newark, Delaware 19711 (US)
(72) Inventor: Benedetti, Steven M., Sterling Heights, Michigan 48313-3614 (US); Nessel, Rosalind A., Birmingham, Michigan 48009 (US)
(74) Representative: Haar, Lucas Heinz Jörn

(56) References cited:
- EP-A- 0 020 308
- US-A- 3 771 275
- US-A- 5 507 610
- US-B1- 6 196 607

## Description

The present invention relates generally to resilient clip fasteners and more particularly to a resilient clip fastener to secure the body portion of the resilient clip to a structure. More specifically, the present invention relates to a fastener for coupling a component having a dog house engagement feature to an aperture, the fastener comprising a body portion having a locking portion configured to be mated with the aperture, said body portion having a dog house engagement portion; the dog house engagement portion defining an abutting flange coupled to the body portion.

Fasteners of the kind mentioned above are disclosed in US-A-5 507 610 and US-A-6 196 607. The known fasteners include a pin and a grommet having a rotationally symmetrical shape so that a rotational alignment of the coupled components cannot be achieved by a single fastener.

From US-A-3 771 275 a retainer for use in attaching a headed fastener to an imperforate support surface is known. The retainer comprises a keyhole and a cavity for receiving a flat circular head and cylindrical neck of the fastener. The fastener has a resilient stud configured to be snap-engaged in a circular opening of a panel and a flexible skirt to be flexed against the outer surface of the panel

Many current vehicles employ resilient clips to secure various components to the vehicle body. One such application concerns interior panels that mount to the interior of the vehicle such as on the doors. Such panels serve not only to provide occupants with a convenient point to grasp during ingress to and egress from the vehicle, but also provide energy absorption during a crash event.

During assembly of the vehicle, it is conventional procedure of the entire panel assembly to be installed onto the interior of the vehicle in a single operation. In other words, the panel assembly is passed through either the windshield or backlight opening of the vehicle body on the assembly line and then the panel assembly is secured by line operators to the interior of the vehicle.

In order to accomplish this assembly task, the panel assembly is typically equipped with numerous fasteners, located around the periphery of the panel assembly as well as at predetermined locations around the interior area of the panel, that are adapted to penetrate through corresponding holes located in the reinforcing sheet metal members of the vehicle interior. It is the responsibility of the line operators to properly orient the panel assembly adjacent the interior of the vehicle and press the fasteners into the various mounting holes in the reinforcing sheet metal members to secure the panel assembly to the interior of the vehicle.

For aesthetic reasons, the panel fasteners are typically secured in some fashion to the backside of the panel so that they are not visible from the interior of the vehicle after the panel assembly is installed. Consequently, it is often incumbent upon the line operators to blindly "feel" for the location of the mounting holes with their fingers before pressing the fasteners into the holes from the opposite show-surface side of the panel.

Due to slight misalignments, which can occur between the fasteners and their corresponding mounting holes, some of the fasteners may not be properly seated and secured to the sheet metal. This is particularly the case in situations were the mounting hole is square or rectangle and must mate with a square ore rectangle fastener. These seating problems often arise from the rotation of the fastener with respect to a rectangular hole, which essentially prevents the easy fastening of the trim component to the body.

Accordingly, there remains a need in the art for an improved fastener having a relatively low installation force and a relatively high removal force that is relatively more tolerant of misalignment problems. Ideally, the fastener should be inexpensive to manufacture, reliable and simple to install. Furthermore, the fastener should be particularly adapted for securing structures to one another in a manner, which minimizes vibration, and the concomitant noise problems that are often associated with such fasteners.

According to the present invention there is provided a fastener for coupling a component having a dog house engagement feature to an aperture, the fastener comprising a body portion having a dog house engagement portion and a locking portion configured to be mated with the aperture, said body portion having a dog house engagement portion; said locking portion comprising a plurality of deformable locking members, said dog house engagement portion defining an abutting flange coupled to the body portion, and an umbrella member coupled to the dog house engagement portion, wherein the abutting flange being configured to engage an engagement surfaces surface defined on the dog house so as to prevent rotation of the body portion with respect to the dog house, and the deformable locking members are coupled with a first end to the umbrella member.

In one preferred form, the present invention provides a resilient clip for engaging a dog house coupling feature of a trim component and a mating member for engaging a hole defined in a body panel, wherein the resilient clip includes a body portion having a coupling region, and a triangular mating feature that is positioned relative to the coupling region and wherein the triangular mating feature engages at least one surface of the dog house structure to prevent rotation of the resilient clip with respect the to the dog house. This reduces rotation of the resilient clip with respect to the hole defined in the body panel. The mating member has a pair of fastening members configured to engage the sides of the mounting hole.

Additional advantages and features of the present invention will become apparent from the subsequent description and the appended claims, taken in conjunction with the accompanying drawings, wherein:
Figure 1 is a front view of a fastener constructed in accordance with the teachings of the present invention;
Figure 2 is a side view of the fastener of Figure 1;
Figure 3 is a top view the fastener of Figure 1 illustrating the spacing of the structures in greater detail;
Figure 4 is a front view of a fastener constructed in accordance with the teachings of an alternate embodiment of the present invention;
Figure 5 is a side view of the fastener of Figure 5;
Figure 6 is a top view of the fastener of Figure 5 illustrating the spacing of the structures in greater detail;
Figure 7 is a perspective view of a trim component having a dog house attachment feature configured to engage the fastener according to the teachings of the present invention;
Figure 8 represents a perspective view of an alternate fastener according to the teaching of the present invention; and
Figure 9 represents a top view of the fastener shown in Figure 8.

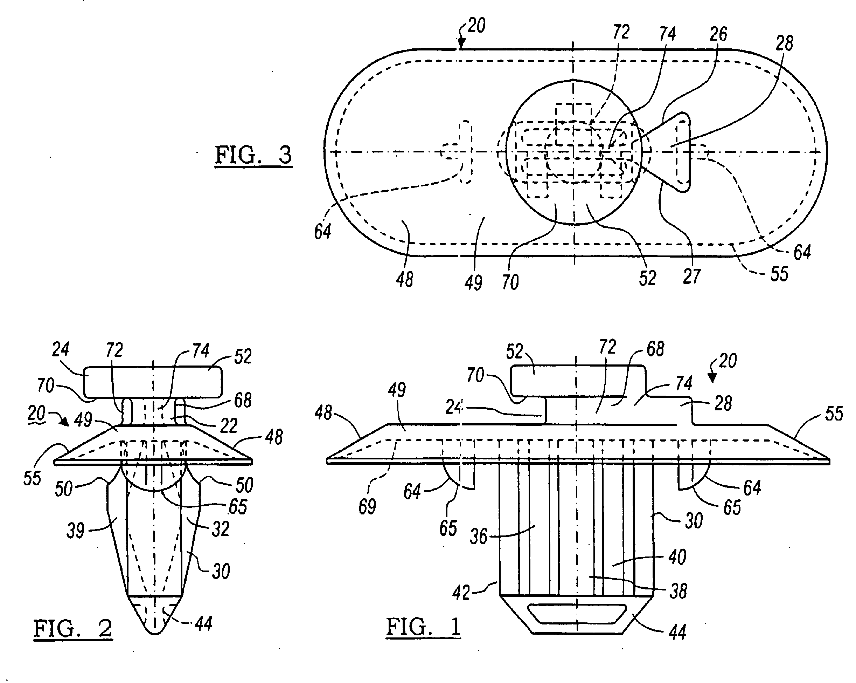

Referring to Figures 1 through 6, a fastener 20 in accordance with the present invention is disclosed. The fastener 20 is defined by a plastic body portion 22 which engages a trim component 23 having a dog house engagement portion 24. Integral with the dog house engagement portion 24 are a pair of engagement surfaces 26 and 27 disposed on an abutting flange 28 which are used to engage the mating surfaces 29 of the dog house 80. Additionally, the body portion 22 has a mating portion 30 which is formed by two sets 32 and 34 of three locking members 36, 38, 40. The two sets 32 and 34 of three locking members 36, 38, 40 are coupled together at a proximal end 42 by an angled or wedge-shaped member 44. The two sets 32 and 34 of three locking members 36, 38, 40 are coupled together at a distal end 46 by a sealing umbrella portion 48. Each of the three locking members 36, 38, 40 define retaining snap in teeth 50 which facilitate the coupling of the plastic body portion 22 to a sheet metal structure.

The umbrella portion 48 functions to seal the mounting hole 53 in the sheet metal structure 51 and is formed of an oval planar portion 49 which is surrounded by a generally oval deformable portion 55. The teeth 50 are configured to pull the deformable oval portion onto the sheet metal 51. Coupled to the distal end 46 and disposed on the sealing umbrella portion 48 is a retaining flange 52 of the dog house engagement portion 24 which functions to laterally bind the fastener 22 to the dog house

Generally, the abutting flange 28 of the dog house engagement portion 24 is defined by the sides of triangular abutting flange member 28. The triangular abutting flange member 28 is defined by the pair of planar engaging surfaces 26 and 27. The planar engaging surfaces 26 and 27 are configured to engage the triangular insertion slot 62 defined in the dog house that facilitates the insertion of the dog house engagement portion 24 into the dog house.

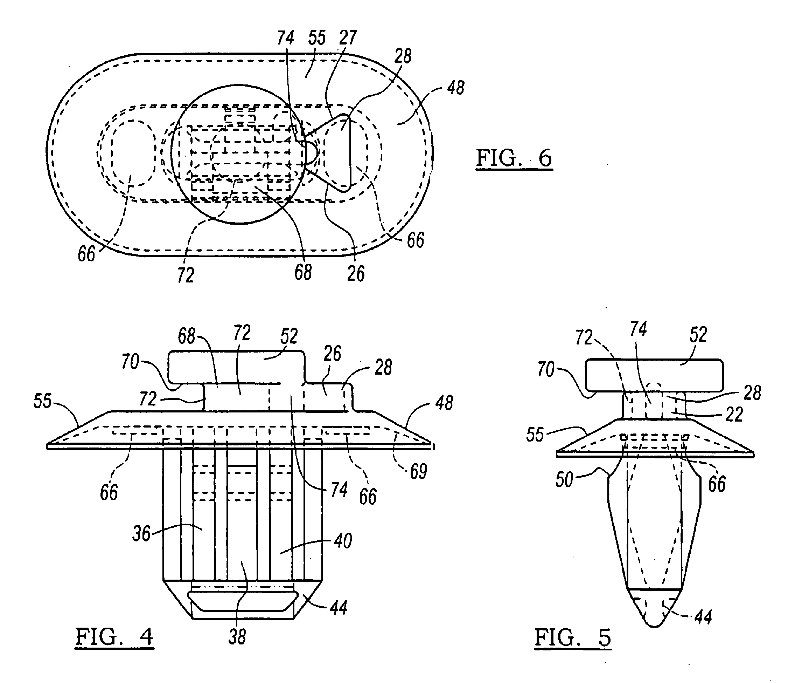

Disposed on the lower surface of the umbrella region is a pair of engagement members 64 and 66. The engagement members 64 are generally perpendicular to the lower surface 69 of the sealing umbrella portion 48. Optionally, these engagement members 64 can engage apertures formed in the sheet metal structure in order to prevent rotation of the fastener with respect to the sheet metal structure. Figures 1-3 depict a t-shaped engagement member 64 which has rounded surfaces 65 which abut the surface of the aperture in the sheet metal structure. Figures 4-6 depict oval engagement members 66. The engagement members 66 function to stand the engagement plastic fastener 20 a predetermined distance from the body panel surface.

Referring generally to Figures 1 and 4, is a view of dog house engagement portion 24 coupled to the plastic body portion 22. The dog house engagement portion 24 has a generally cylindrical-shaped member 68 and has the retaining flange 52. The retaining flange 52 has a surface 70 which engages and interior surface of the dog house of the trim component. The generally cylindrical-shaped member 68 has a circular outer surface 72 which functions to guide the engagement portion between the angled insertion surfaces of the dog house. The circular outer surface 72 further functions to mate with a circular aperture defined within the dog house and prevent its lateral removal. The dog house engagement portion 24 includes a connecting flange 74 that is configured to rigidly connect the triangular flange member 28 to the cylindrical coupling member 72.

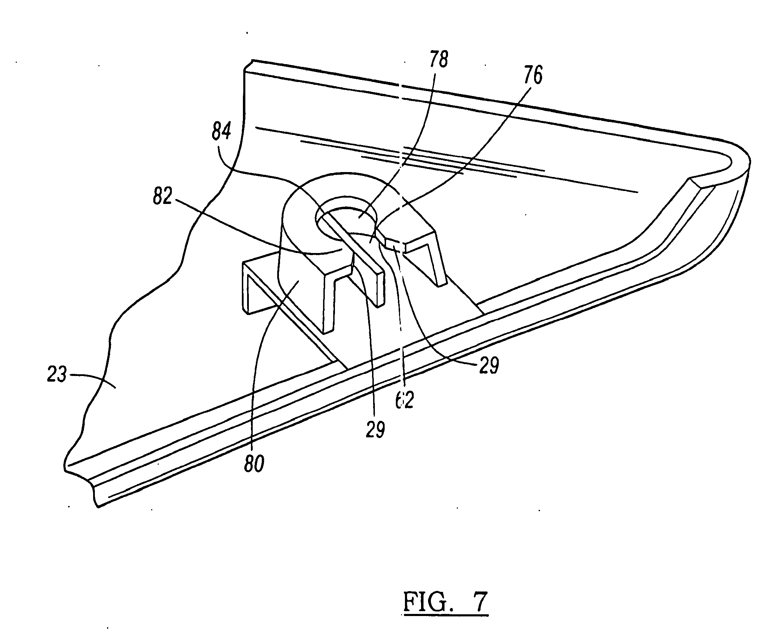

As can be seen in Figure 7, the dog house 80 defines an upper keyhole slot 76 which allows displacement of the dog house retention members 82. The dog house defines a circular aperture 84 having a diameter slightly larger than the diameter of cylindrical-shaped member 68. The triangular insertion slot 62 is defined between the mating surfaces 29 of the dog house 80. Preferably, both engagement surfaces 26 and 27 contact each of the mating surfaces 29 at the same time. This prevents rotation and translation of the fastener 20.

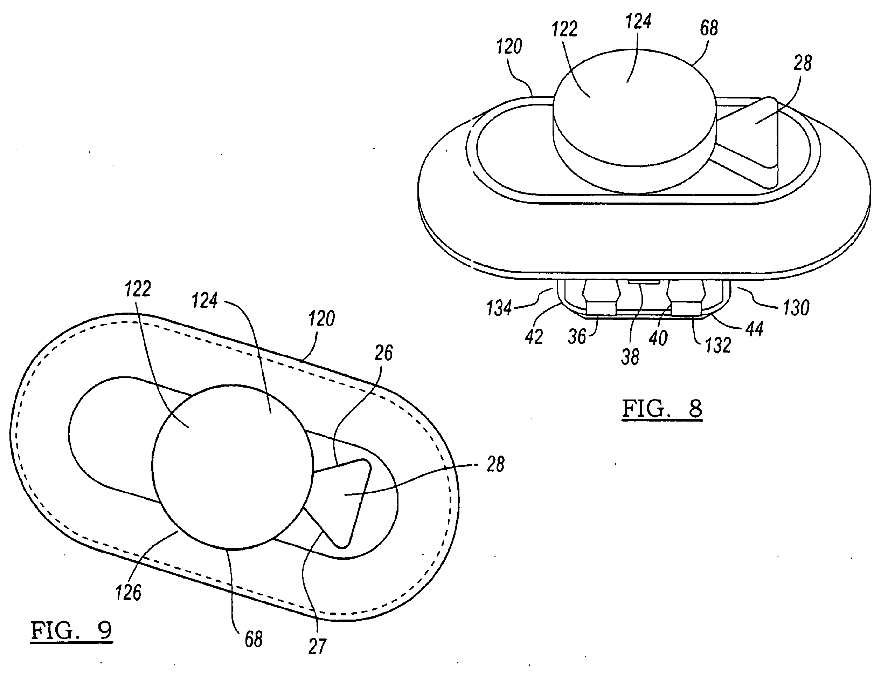

As shown in Figures 8 and 9, the fastener 120 in accordance with another embodiment of the present invention is disclosed. The fastener 120 is defined by a plastic body portion 122 having a dog house engagement portion 124. Integral with the dog house engagement portion 124 are pairs engagement surface 26 and 27 disposed on an abutting flange 28 which are used to engage a surface of the dog house engagement portion 124. Additionally, the body portion 122 has a locking portion 130 which is formed by two sets 132 and 134 of three locking members 36, 38, 40. The two sets 132 and 134 of three locking members 36, 38,40 are coupled together at a proximal end 42 by an angled or wedge-shaped member 44. The two sets 32 and 34 of three locking members 36, 38, 40 are coupled together at a distal end 46 by a sealing umbrella portion 48. Each of the three locking members 36, 38, 40 define retaining snap in teeth 50 which facilitate the coupling of the plastic body portion 22 to a sheet metal structure 51. The dog house engagement portion 124 is a cylindrical body 126 without a retaining flange.

The foregoing discussion discloses and describes exemplary embodiments of the present invention. One skilled in the art will readily recognize from such a discussion, and from the accompanying drawings and claims that various changes, modifications, and variations can be made therein without departing from the scope of the invention.

## Claims

1. A fastener (20) for coupling a component (23) having a dog house engagement feature to an aperture comprising:
a body portion (22) having a dog house engagement portion (24), and a locking portion (30) configured to be mated with the aperture,
said the locking portion (30) comprising a plurality of deformable locking members (36, 38, 40) ;
said dog house engagement portion (24) defining an abutting flange (28) coupled to the body portion, and
an umbrella member (48) coupled to the dog house engagement portion (24),
**characterised in that**
the abutting flange (28) is configured to engage an engagement surfaces (29) surface defined on the dog house (80) so as to prevent rotation of the body portion with respect to the dog house, and the deformable locking members (36, 38, 40) are coupled with a first end to the umbrella member (48).

2. The fastener according to Claim 1 wherein the umbrella member is configured to fluidly seal the aperture.

3. The fastener according to anyone of Claims 1 and 2 wherein each deformable locking member defines a tooth (50) configured to engage the aperture.

4. The fastener according to anyone of Claims 1 to 3 wherein the deformable members (36,38,40) are coupled with a second end to a wedged-shaped member (44).

5. The fastener according to Claim 1 wherein the abutting flange (28) is configured to couple with a triangular insertion slot (62) defined by the dog house (80).

6. The fastener according to Claim 5 wherein the abutting flange (28) is a triangular flange.

7. The fastener according to Claim 6 wherein the triangular abutting flange (28) has a pair of flat bearing surfaces (26, 27).

8. The fastener according to anyone of the preceding Claims wherein the dog house engagement portion (24) defines a cylindrical shaped member (68) configured to couple to an aperture (84) defined by the dog house (80).

9. The fastener according to anyone of the preceding Claims wherein the body portion (22) comprises a engagement member (64) configured to engage an aperture.

10. The fastener according to anyone of the preceding Claims wherein the body portion (22) comprises a engagement member (66) configured to limit the insertion of the fastener into the aperture.

11. The fastener according to anyone of the preceding Claims wherein the umbrella portion (48) defines a generally oval base and an oval deformable portion.

12. The fastener according to Claim 1 wherein the locking portion (30) is a wedge-shaped member (44) defining a plurality of deformable flanges.

## Patentansprüche

1. Befestigungselement (20) zum Verbinden eines ein Einsatzöffnungseingriffsmerkmal aufweisendes Bauelements (23) an einer Öffnung, umfassend:
einen einen Einsatzöffnungseingriffsabschnitt (24) aufweisenden Körperabschnitt (22) und einen zum Verbinden mit der Öffnung ausgestalteten Verriegelungsabschnitt (30),
wobei der Verriegelungsabschnitt (30) mehrere verformbare Verriegelungsglieder (36, 38, 40) umfaßt;
wobei der Einsatzöffnungseingriffsabschnitt (24) einen mit dem Körperabschnitt verbundenen Stoßflansch (28) bildet, und
ein mit dem Einsatzöffnungseingriffsabschnitt (24) verbundenes Schirmglied (48), **dadurch gekennzeichnet, dass**
der Stoßflansch (28) so ausgestaltet ist, dass er an der Einsatzöffnung (80) mit einer der an der Einsatzöffnung gebildeten Eingriffsoberflächen (29) in Eingriff gelangt, um eine Drehung des Körperabschnitts in Bezug auf die Einsatzöffnung zu verhindern, und dass die verformbaren Verriegelungsglieder (36, 38, 40) mit einem ersten Ende mit dem Schirmglied (48) verbunden sind.

2. Befestigungselement nach Anspruch 1, wobei das Schirmglied ausgestaltet ist, die Öffnung fluidisch abzudichten.

3. Befestigungselement nach einem der Ansprüche 1 und 2, wobei jedes verformbare Verriegelungsglied einen Zahn (50) bildet, der ausgestaltet ist, mit der Öffnung in Eingriff zu gelangen.

4. Befestigungselement nach einem der Ansprüche 1 bis 3, wobei die verformbaren Glieder (36, 38, 40) mit einem zweiten Ende mit einem keilförmigen Glied (44) verbunden sind.

5. Befestigungselement nach Anspruch 1, wobei der Stoßflansch (28) ausgestaltet ist, an einen durch die Einsatzöffnung (80) gebildeten dreieckigen Einfügeschlitz (62) anzukoppeln.

6. Befestigungselement nach Anspruch 5, wobei der Stoßflansch (28) ein dreieckiger Flansch ist.

7. Befestigungselement nach Anspruch 6, wobei der dreieckige Stoßflansch (28) ein Paar flache Lagerflächen (26, 27) aufweist.

8. Befestigungselement nach einem der vorhergehenden Ansprüche, wobei der Einsatzöffnungseingriffsabschnitt (24) ein zylindrisches Glied (68) bildet, das ausgestaltet ist, an eine durch die Einsatzöffnung (80) gebildete Öffnung (84) anzukoppeln.

9. Befestigungselement nach einem der vorhergehenden Ansprüche, wobei der Körperabschnitt (22) ein Eingriffsglied (64) umfaßt, das ausgestaltet ist, mit einer Öffnung in Eingriff zu gelangen.

10. Befestigungselement nach einem der vorhergehenden Ansprüche, wobei der Körperabschnitt (22) ein Eingriffsglied (66) umfaßt, das ausgestaltet ist, das Einsetzen des Befestigungselements in die Öffnung zu begrenzen.

11. Befestigungselement nach einem der vorhergehenden Ansprüche, wobei der Schirmabschnitt (48) eine im Wesentlichen ovale Basis und einen ovalen verformbaren Abschnitt bildet.

12. Befestigungselement nach Anspruch 1, wobei der Verriegelungsabschnitt (30) ein keilförmiges Glied (44) ist, das mehrere verformbare Flansche bildet.

## Revendications

1. Un élément de fixation (20) pour couplage à un composant (23) présentant une caractéristique d'engagement en niche à chien envers une ouverture, comprenant :
une partie de corps (22), ayant une partie de mise en prise avec une niche à chien (24), et une partie de verrouillage (30), configurée pour être adaptée avec l'ouverture ;
ladite partie de verrouillage (30) comprenant une pluralité d'organes de verrouillage (36, 38, 40) déformable ;
ladite partie de mise en prise avec une niche à chien (24) définissant une nervure de butée (28) couplée à la partie corps ; et
un organe en forme d'ombrelle (48) couplé à la partie de mise en prise avec une niche à chien (24), **caractérisé en ce que** la nervure de butée (28) est configurée pour venir en prise avec des surfaces de mise en prise (29) définies sur la niche à chien (80), pour empêcher la rotation de la partie de corps par rapport à la niche à chien, et les organes de verrouillage (36, 38, 40) déformables sont couplés avec une première extrémité à l'organe formant ombrelle (48).

2. L'élément de fixation selon la revendication 1, dans lequel l'organe en forme d'ombrelle est configuré pour fermer de façon étanche aux fluides l'ouverture.

3. L'élément de fixation selon l'une des quelconques des revendications 1 et 2, dans lequel chaque organe de verrouillage déformable définit une dent (50), configurée pour venir en prise avec l'ouverture.

4. L'élément de fixation selon l'une quelconque des revendications 1 à 3, dans lequel les organes (36, 38, 40) sont couplés, à leur deuxième extrémité, avec un organe cunéiiforme (44).

5. L'élément de fixation selon la revendication 1, dans lequel la nervure de mise en butée (28) est configurée pour accouplement à une fente d'insertion (62) triangulaire, définie par la niche à chien (80).

6. L'élément de fixation selon la revendication 4, dans lequel la nervure de mise en butée (28) est une nervure triangulaire.

7. L'élément de fixation selon la revendication 6, dans lequel la nervure de mise en butée (28) triangulaire comprend une paire de surfaces de portée (26, 28) plates.

8. L'élément de fixation selon l'une quelconque des revendications précédentes, dans lequel la partie de mise en prise avec la niche à chien (24) définit un organe (68) de forme cylindrique, configuré pour s'accoupler avec une ouverture (84) définie par la niche à chien (80).

9. L'élément de fixation selon l'une quelconque des revendications précédentes, dans lequel la partie corps (22) comprend un organe de mise en prise (64), configuré pour venir en prise avec une ouverture.

10. L'élément de fixation selon l'une quelconque des revendications précédentes, dans lequel la partie corps (22) comprend un organe de mise en prise (66), configuré pour limiter l'insertion de l'élément de fixation à l'intérieur de l'ouverture.

11. L'élément de fixation selon l'une quelconque des revendications précédentes, dans lequel la partie formant ombrelle (48) définit une base globalement ovale et une partie ovale déformable.

12. L'élément de fixation selon la revendication 1, dans lequel la partie de verrouillage (30) est un organe cunéiforme (44), définissant une pluralité de nervures déformables.
